# EUROPEAN PATENT SPECIFICATION

(11) **EP 1 050 020 B1**
(45) Date of publication and mention of the grant of the patent: **12.03.2003**
(21) Application number: 98966437.0
(22) Date of filing: 29.12.1998
(51) Int. Cl.: G06T 17/00, G06T 17/50

(54) **METHOD FOR REPRESENTING GEOMETRIC SHAPES AND GEOMETRIC STRUCTURES IN COMPUTER GRAPHICS**
VERFAHREN ZUM REPRAESENTIEREN VON GEOMETRISCHEN FORMEN UND GEOMETRISCHEN STRUKTUREN IN COMPUTERGRAFIKEN
PROCEDE DE REPRESENTATION DE FORMES ET DE STRUCTURES GEOMETRIQUES DANS DES GRAPHIQUES INFORMATIQUES

(30) Priority: 30.12.1997 NO 976159; 07.04.1998 NO 981611
(43) Date of publication of application: 08.11.2000
(73) Proprietor: The Mobile Media Company AS, 0050 Oslo (NO)
(72) Inventor: DOKKEN, Tor, N-0382 Oslo (NO); KASA, Johannes, N-0764 Oslo (NO); QUAK, Ewald, N-0378 Oslo (NO); NORDHAGEN, Else, N-0860 Oslo (NO)
(74) Representative: Becker Kurig Straus
(86) International application number: NO9800390
(87) International publication number: WO99034335

(56) References cited:
- GB-A- 2 214 037
- GB-A- 2 311 154
- US-A- 5 627 949
- Mark Allen Weiss, "Data Structures and Problem Solving Using Java", Addison-Wesley 1998

## Description

### Background of the Invention

### 1. Field of the Invention

The present invention relates to representation of geometric shapes and geometric structures in computer graphics. The invention further relates to modeling of three dimensional objects and animation of such objects in computer systems, and more specifically to a method for describing such objects and their animation through a graph structure of ordered geometric entities.

In addition, the invention relates to creation and editing of such objects and animations through building models and animations by creating and manipulating smaller pieces of a model or animation in the graph.

### 2. Description of Related Art

There is a fast growing market for animated geometry and its distribution through the Internet and other means. Relevant applications include CAD/CAM, medical diagnosis systems, computer games, virtual reality systems, electronic shopping, screensavers and visualization of complex information such as weather conditions, ocean currents, seismographic data, etc.

The emerging standard for Internet-related animated geometry is the so-called Virtual Reality Modeling Language (VRML). In VRML, the shapes of 3D-objects are either primitives (spheres, cylinders, cones) or represented by polygons, i.e. a net of planar facets bounded by straight lines. In order to describe a complicated shape and achieve visual smoothness at a certain resolution, typically a huge number of polygons are necessary and the model in itself is still not smooth. Composite 3D-objects in VRML can be defined by beginning with a root object, on which several branch (child) objects depend, which in turn can have new child objects, resulting in a simple tree. While this type of composition allows definition of separate movements of sub-trees in a 3D-object, such movements in VRML can only consist of simple shirts, rotations, and linear interpolation between an initial and an end position. The present invention facilitates the definition of 3D-objects which are far more complicated in their topological structure. The invention also enables the animation of such 3D-objects and their separate parts in various sophisticated ways, allowing smooth paths and complicated acceleration effects.

In order to achieve smooth shapes and movements and efficient representations of them, the preferred embodiments of our invention is based on spline curves and surfaces, of which B-splines and Non Uniform Rational B-Splines (NURBS) are specific variants, as well as triangulations and algebraic geometry. Splines as piecewise polynomials are not incorporated in VRML, but are normally used in high-level CAD/CAM applications with user-defined smoothness. Some hierarchical shape modeling using splines has been carried out before in a more limited context, see Barghiel, Cristin, Richard Bartels and David Forsey, Pasting Spline Surfaces, in Mathematical Methods for Curves And Surfaces, proceedings of a conference held June 16-21, 1994 in Ulvik, Norway, editors: M. Daehlen, T. Lyche, L. L. Schumaker, pp. 31-40, Vanderbilt University Press, Nashville, TN.

Mark Allen Weiss, *Data Structures and Problem Solving Using Java* (Addison-Wesley 1998) page 367, provides some definitions of the mathematical concepts used in the following specification:

"A *graph G = (V, E)* consists of a set of vertices, *V*, and a set of edges, *E*. Each edge is a pair *(v, w*), where *v*, *w* ε *V*. Vertices are sometimes called *nodes,* and edges are sometimes called *arcs.* Directed graphs are sometimes called a *digraphs*. [...] Sometimes an edge has a third component, called *weight* or a *cost*."

In the present invention, vertices are referred to as topological nodes. Data associated with each topological node describe 3D geometric shapes, possibly time dependent, and is stored in geometric entities linked to the topological nodes. Edges are referred to as anchors, and in the present invention one anchor can represent one or more edges. The anchors have weights represented as data associated with the anchors and stored in the geometric entities linked to the anchors. The data (weight) associated with an anchor describes how a geometric shape can be anchored to some other geometric shape.

### Summary of the Invention

It is the object of the invention to provide a method for representing three dimensional (3D) objects and animation of such objects in a way that significantly reduces the storage requirements for these representations. This applies to 3D free-form objects in particular. Since the amount of data necessary for storing and transferring such objects and animations is reduced, the invention facilitates the sharing of such objects and animations between several computers, several users etc. The invention will also simplify the work necessary for creating such objects and animations by allowing 3D objects to be partitioned into several separate entities which may be separately described and manipulated. The different entities can be combined in a number of ways, and various kinds of relationships between the entities may be defined, thus making it possible to combine parts into units in varying ways, and to manipulate one or more parts as units depending on what is most convenient at different stages of the modeling and animation work.

To achieve the above mentioned object of the present invention, a method for modeling of three dimensional objects and their animated movements is presented. The method utilizes the hierarchical, duplication and multiresolution properties of many three dimensional free-form objects and their animation. The method for representing such objects and their animation can be described as Geometry Anchored Geometry, henceforth referred to as GAGs, and the resulting representation is referred to as a GAGs model.

In the GAGs model, 3D objects are described as sets of geometric entities such as points, curves and surfaces. These geometric entities are linked to topological nodes where each topological node describe some part of some 3D object. The topological nodes are anchored to each other in such a way that they form a directed graph structure of underlayers with overlayers. Any topological node can be anchored to one or more underlayers and have any number of overlayers anchored to it. The anchoring of the topological nodes is defined in such a manner that the geometry of an overlayer depends on its underlayers and therefore the overlayers geometry will be defined relatively to the underlying topological nodes' geometries and in this way a change made to the geometry of an underlayer will also lead to an update of the geometries of all the anchored overlayers. Additional geometric entities are linked to the anchors. Hence the topological information about the model resides in the topological nodes and the anchors, while the geometric information resides in the geometric entities that are linked to the topological nodes and the anchors respectively.

When the model is an animation, movement information will be found as time dependent information in the geometric entities. Movement description in geometric entities referring to topological nodes will describe time dependent change in the geometric description of points, curves or surfaces that constitute the geometric object as such, while movement description in the geometric entities referring to the anchors will describe time dependent movement of the geometric relationship between the over- and underlayers.

Conversions define relationships between local entity and global model occurrences, for instance with regard to time: conversion functions define relationship between local time of a time dependent movement and global time; with regard to the geometry of a topological node: conversion matrices define relationships between the local coordinates of the topological node and global coordinates of the whole scene of which the topological node is a part

Any set of topological nodes, anchors and/or geometric entities can be used as prototypes when defining new sets of topological nodes, anchors and/or geometric entities. A set of topological nodes, anchors and/or geometric entities which is defined based on such a prototype can override any information in the prototype and/or define a transformation which describe some geometric relationship between the prototype and the topological nodes, anchors and geometric entities.

### Brief description of the drawings

Fig. 1 shows the GAGs structure in a generalized form.
Fig. 2 shows an example of an animated object.
Fig. 3 shows the GAGs model of a part of the animated object shown in figure 2.

### Description of the preferred embodiment

The method according to the present invention can preferably be utilized in order to create representations of three dimensional (3D) objects and animation of such objects. Such a representation will be referred to as a GAGs model. A GAGs model can be used in different contexts. Typically GAGs models will be used in computer systems, either as part of a single system or distributed on several collaborating computer systems. GAGs models are also stored as one or more files and such files may be sent over computer networks such as the Internet. The GAGs models will be efficient representations of three dimensional free-form geometric models and their animation including non-linear movements. File formats utilizing the properties of the GAGs model will therefore provide a preferable alternative to previous file formats such as VRML.

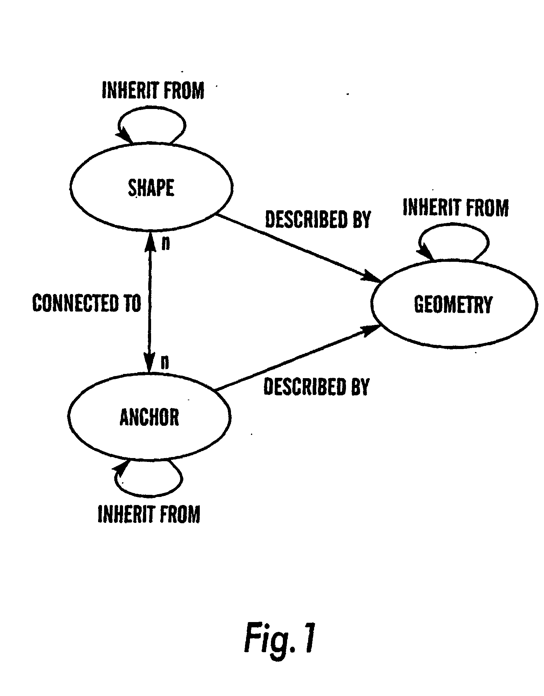

Referring to figure 1, a GAGs model consists of topological nodes that are anchored to other topological nodes. Each topological node and anchor is associated with one or more geometric entities. The topological nodes and anchors define the topology of the model, while the geometric entities make up the geometrical part of the model.

Within the scope of the invention, it is possible to implement this structure in any number of ways. In a given implementation the different units of the model, topological nodes, anchors and geometric entities, will not necessarily be realized as separate units. In the case where the GAGs model is programmed in an object-oriented language the units may be defined as separate objects as well as by any number of objects, and it will also be possible to combine several units in one object. For instance can one object include a topological node as well as its anchors and any relevant geometric entities.

The topology of the model is defined by a structure of topological nodes and anchors. This structure describes the relationships between the geometric entities. A topological node represents a part of a 3D object. An anchor describes how different parts of the 3D objects are related to each other.

In GAGs two different kinds of topological nodes are identified, namely bases and features. Bases are defined globally and independently, whereas features are anchored to underlying topological nodes and defined relatively to the underlying topological node(s). Any feature can be anchored to one or more underlying topological nodes. Also, a topological node can have any number of overlaying topological nodes anchored to it. In this way the topological node and anchor structure forms a directed graph. The number of levels in the graph reflects the complexity of the geometry of the represented 3D object(s), where a base is in general a global element while details are placed further up the graph as features. The topological node or nodes to which a given topological node is anchored (including its geometric entities), will be referred to as underlayers in respect to this topological node, while topological nodes anchored to it will be referred to as its overlayers.

The anchoring between 2 topological nodes are performed by one or more anchors. Each anchor connects a part of the overlaying topological node to the underlayer. We call this part the area of influence of the anchor on the topological node. Several anchors may have overlapping areas of influence. An example is a rubber string knit between 2 fingers. The 2 knit points are anchors with areas of influence over the complete string, but the weighing between them depends on the distances to the knit points.

Each anchor consists of one or more anchor points, which have their own area of influence. These areas are subparts of the anchors area of influence, and may also overlap.

The anchoring can be performed statically or dynamically. A static anchor does not move relative to the underlying topological node, while a dynamic anchor contains movement information in order to move the overlayer relative to the underlayer.

While the topological nodes and the anchors describe the topology of the model, the geometric entities describe the geometry. Geometric entities can be linked to topological nodes as well as to anchors. A geometric entity that is linked to a topological node will normally describe the shape of a part of the 3D object that is modeled. Geometric entities that are linked to anchors typically describe how the anchors anchor an overlaying topological node to the underlying topological node. Such descriptions will typically include points of anchoring and tracks these points will follow. Geometric entities are also used to describe time dependencies of these geometric descriptions.

Geometric entities are of different types, typically points, curves and surfaces. The GAGs model is independent of how such geometric entities are represented. However, using splines to represent free-form 3D objects gives a compact representation and the smoothness of the geometry is not dependent on the distance from the viewpoint to the geometric object.

Geometric entities can also be used to define conversion functions defining relationships between local entity and global model-occurrences, for instance with respect to time. A conversion function will convert from the local time of the movements to the global time of the animation. These conversion functions are typically one dimensional curves. The functions may be linear, but other shapes are also possible, e.g., to describe acceleration in a movement.

Conversions between the local description of a geometry and the global geometry description are represented by conversion matrices, typicaly a 4 x 4 matrix.

Movement can be represented as time dependent topological nodes, anchors and geometric entities. Movement in anchors typically describe time dependent movements of the geometric relationship of the under- and overlayers. For example an anchor may describe how an overlayer moves along a track on an underlayer. Movement can also be represented as time dependent geometric entities associated with a topological node. A simple example is a topological node which has a size that varies over time.

If a change is made to one topological node, this will normally affect other nodes as well. Since a 3D object is represented by a graph of several objects, most objects will have several overlayers. These overlayers will all be features which, as already described, are defined relative to their underlying topological nodes. The anchors describe how the geometry of the overlying topological node depends on the underlying topological node. Hence a change to a given topological node may lead to corresponding changes in any or all overlaying topological nodes. Because of this, some forms of animation of 3D objects with many parts can be done by just changing some underlying topological nodes and the overlaying topological nodes will change in accordance with the underlayer.

Animation can also be described by topological nodes changing anchoring and geometric entity, i.e. the anchor or geometric entity is not changed, but its effect upon topological objects or anchors may be turned on and off. For this purpose time intervals can be associated with each anchor, topological node and geometric entity describing the parts of the animation sequence where the anchor, topological node or geometric entity is active. Alternatively conditions are defined that dictates whether the topological node, anchor or geometric entity is active.

A base can only be animated by letting a geometric entity associated with it be time dependent.

A feature can be animated in one or more of the following ways:
1. A geometric entity associated with the topological node is time dependent and changes over time
2. A geometric entity of one of the underlayers of a topological node changes over time
3. One or more of the anchors of the topological node or any geometric entity referring to such an anchor is time dependent and changes over time
4. Time moves into or out of the time interval associated with the topological node itself, one or more anchors associated with the topological node, or one or more geometric entities associated with the topological node.
5. A defined condition is fulfilled, such as the presence, absence or proximity of an other part of the 3D object or an input from a user interface or any other event from a source external to the GAGs structure.

The GAGs model will typically contain all topological nodes and anchors that are defined at the time, but the rendered part of the GAGs model will vary as the animation time changes, moving in and out of the time-intervals associated with the different topological nodes, anchors and geometric entities, and as conditions associated with topological nodes, anchors and geometric entities are or are not fulfilled.

Any topological node, anchor and geometric entity can be used as a prototype when defining new topological nodes, anchors and geometric entities respectively. Further, a prototype may also consist of a set of any number of topological nodes, anchors and/or geometric entities. A topological node, anchor or geometric entity which is defined based on a prototype can override any information in the prototype and/or define a transformation which describes the relationship between the prototype and the topological node, anchor or geometric entity. The same is true for a part of a geometric object and/or animation which is defined based on a more complex prototype.

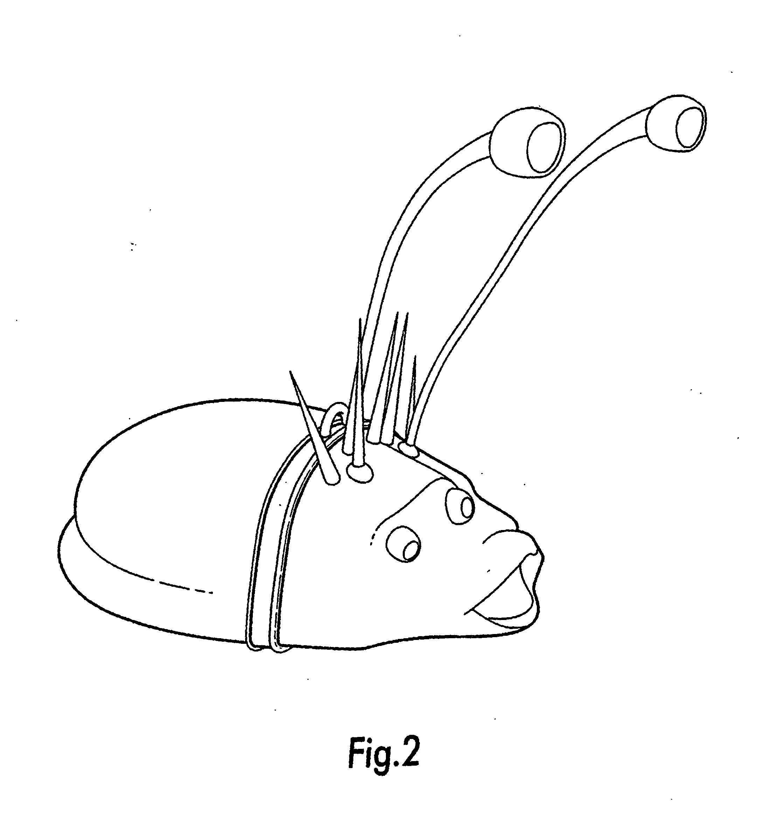

Figure 2 shows a typical animated creature, the ghost slug Spike. He has spikes protruding from his back, four eyes, two anchored directly to the body and two anchored to antennae. The eyes consists of one or more eye globes and one ore more lenses. In addition, Spike has a convenient collar with a hoop to secure a chain. By analyzing the GAGs model, it can be noticed that many of the parts of the 3D objects are quite similar. All the spikes on Spike's back are separate topological nodes in the global graph structure of the GAGs model. However, they are all defined by reference to the same topological node which is the prototype, and they are zoomed and tilted differently and located in different positions on Spike's back. Alternatively, the geometric entities describing the topological nodes can be defined by means of a reference to a prototype geometric entity.

It will also be noticed that the eye and antennae arrangements are situated symmetrically on both sides of the body, one of the sets can be viewed as just a mirroring of the other. This kind of symmetry is a quite common situation, not an artifact particular to our example.

Further, it can also be noticed that the shapes of some parts of Spike depend on the shape of other parts. For example, if the body moves, all the other shapes follow. Also, if an antennae waves, the anchored eye will show a similar waving.

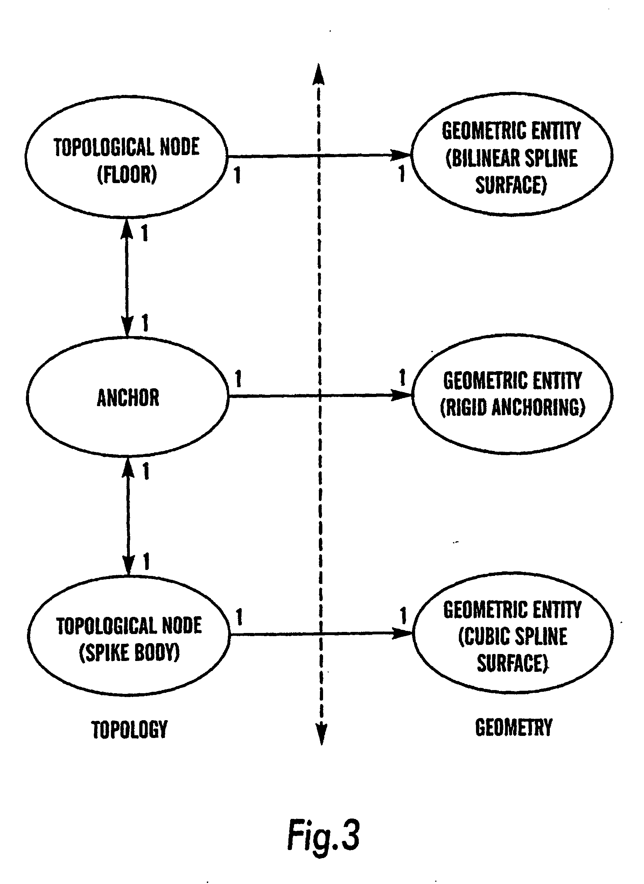

Figure 3 shows how these relationships are modeled by a GAGs model creating a graph of topological nodes and anchors with associated geometric entities.

The floor is the base topological node, while Spike's body is an overlayer relative to the floor. The anchor between the floor and the body is a dynamic anchor which defines a movement which the body will go through as the animation time progresses. Since the spikes are anchored to the body by static anchors, a movement of the body will also lead to the spikes moving by the same amount, thus always being attached to the same point on Spike's back.

As already described, since the spikes are all equal in shape, one spike is used as a prototype and the other spike topological nodes (or their associated geometric entities) refer to the spike prototype and add or override information about where the spike is positioned on the body and in which direction it is pointing. Depending on choice of anchoring, a spike may always point in the same direction relative to the body or change direction independent of the body's movements. This will typically be modeled by time dependencies in the anchors.

In the example the antennae are built by anchoring a surface to a spine. The spine curve defines the curving of the antennae and is anchored to the body. The curving of the spine may change over time. This is modeled by letting the topological node representing the spine refer to a geometric entity which is a time dependent spline. There are several ways to let the speed of the moving antennae change. Either this can be modeled directly on the time dependent spline. Another alternative is to let the time progression in the spline be rather constant, but associate an additional geometric entity with the spine topological node. This new geometric entity will define a conversion from local time to global time in such a way that the speed of the spine's movements is varied over time.

If one of Spike's antennas is to be a mirror image of the other antennae, this can be efficiently represented in GAGs by letting one antennae be a prototype which definition of the other antennae is based on. The only additional information in the other antennae is a function describing the mirroring. In this case the prototype will be a graph consisting of several topological nodes, anchors and geometric entities.

## Claims

1. Method for representing geometric shapes and geometric structures in computer graphics, comprising the steps of
describing geometric objects as a set of geometric entities such as points, curves and surfaces,
linking each geometric entity to at least one topological node thus defining a geometric shape associated with the topological node,
defining anchors that each refer to one overlaying topological node and one underlaying topological node so that a directed graph structure of overlayers and underlayers is created, where each topological node can be anchored to any number of underlayers and have any number of overlayers anchored to it, and so that the geometry of an overlayer is dependent on its underlayers,
describing geometric properties of the anchors as additional geometric entities,
linking each of these additional geometric entities to at least one anchor.

2. Method according to claim 1, where one or more anchor points are associated with each anchoring of an overlayer to an underlayer.

3. Method according to claim 1, where a geometric entity linked to any topological node can be either a curve or a surface or a point, and where a topological node can be anchored to other topological nodes independent of what kind of geometric entities it is linked to, thus allowing the anchoring of surface to surface, surface to curve, curve to surface and curve to curve.

4. Method according to claim 1, where at least some of the geometric entities are described as splines.

5. Method according to claim 1, where at least some of the geometric entities are described as Non-Uniform Rational B-splines (NURBS).

6. Method according to claim 1, where at least some of the geometric entities are described as B-splines.

7. Method according to claim 1, where at least some of the geometric entities are described by polygons.

8. Method according to claim 1, where at least some of the geometric entities are described by algebraic equations.

9. Method according to claim 1, where any sub-part of the topological node graph structure, including geometric entities, is used as a prototype for any number of occurrences, so that every such occurrence is described by using a reference to the prototype.

10. Method according to claim 9, where any occurrence that refer to a prototype may override one or more of the properties of the prototype.

11. Method according to claim 9, where the occurrence that refer to a prototype also include a transformation matrix, defining a transformation from the prototype to the referring instance.

12. Method according to claim 1, where the geometric shape of a given topological node can be changed in any of the following ways:
- by changing the geometric entity linked to the topological node,
- by changing the anchors between the topological node and its underlaying topological nodes,
- by changing the anchor points in any of the anchors between the topological node and its underlaying topological nodes,
- by changing the underlaying topological nodes through any of the previous ways.

13. Method according to claim 1,
where any information describing geometric entities, topological nodes as well as anchors may be time dependent, and where the dependency of overlayers on underlayers will lead to time dependency in any overlayer anchored to a time dependent underlayer.

14. Method according to claim 13, where one or more anchor points are associated with each anchoring of an overlayer to an underlayer and where a change in the position of the anchor points relative to each other or relative to the geometry of the underlying topological nodes will influence the geometric shape of the overlayer according to the rules in the definition of the anchor.

15. Method according to claim 13, where a time interval may be defined for any topological node, anchor or geometric entity, said time interval defining when the topological node, anchor or geometric entity is active.

16. Method according to claim 13, where a condition may be defined for any topological node, anchor or geometric entity, said condition defining whether the topological node, anchor or geometric entity should be active.

17. Method according to claim 16, where the condition may be the presence, absence or proximity of any other part of the geometric representation or the presence of a defined input from a user interface or any other defined event from a source external to the geometric representation.

18. Method according to claim 13, where a geometric entity linked to any topological node can be either a curve or a surface or a point, and where a topological node can be anchored to other topological nodes independent of what kind of geometric entities it is linked to, thus allowing the anchoring of surface to surface, surface to curve, curve to surface and curve to curve.

19. Method according to claim 13, where at least some of the geometric entities are described as splines.

20. Method according to claim 13, where at least some of the geometric entities are described as Non-Uniform Rational B-splines (NURBS).

21. Method according to claim 13, where at least some of the geometric entities are described as B-splines.

22. Method according to claim 13, where at least some of the geometric entities are described by polygons.

23. Method according to claim 13, where at least some of the geometric entities are described by algebraic equations.

24. Method according to claim 13, where any sub-part of the topological node graph structure, including geometric entities, is used as a prototype for any number of occurrences, so that every such occurrence is described by using a reference to the prototype.

25. Method according to claim 24, where any occurrence that refer to a prototype may override one or more of the properties of the prototype.

26. Method according to claim 24, where the occurrence that refer to a prototype also include a transformation matrix, defining a transformation from the prototype to the referring instance.

## Patentansprüche

1. Verfahren zum Darstellen geometrischer Formen und geometrischer Strukturen in Computergrafiken, aufweisend die Schritte von:
Beschreiben geometrischer Objekte als einen Satz geometrischer Einheiten wie Punkte, Kurven und Oberflächen,
Verbinden jeder geometrischen Einheit mit zumindest einem topologischen Knoten, dadurch eine dem topologischen Knoten zugeordnete geometrische Form definierend,
Definieren von Ankern, die sich jeweils auf einen darüber liegenden topologischen Knoten und einen darunter liegenden topologischen Knoten beziehen, sodass eine gerichtete grafische Struktur von oberen Schichten und unteren Schichten erzeugt wird, wobei jeder topologische Knoten an einer Anzahl von unteren Schichten verankert werden kann und eine Anzahl von daran verankerten oberen Schichten aufweisen kann, und sodass die Geometrie einer oberen Schicht von ihren unteren Schichten abhängt,
Beschreiben der geometrischen Eigenschaften der Anker als zusätzliche geometrische Einheiten,
Verbinden jeder dieser zusätzlichen geometrischen Einheiten mit zumindest einem Anker.

2. Verfahren gemäß Anspruch 1, wobei ein oder mehrere Ankerpunkte jeder Verankerung einer oberen Schicht an einer unteren Schicht zugeordnet sind.

3. Verfahren gemäß Anspruch 1, wobei eine mit einem topologischen Knoten verbundene geometrische Einheit eine Kurve, oder eine Oberfläche oder ein Punkt sein kann, und wobei ein topologischer Knoten an anderen topologischen Knoten verankert sein kann, unabhängig davon, mit welcher Art von geometrischen Einheiten er verbunden ist, dadurch die Verankerung von Oberfläche an Oberfläche, Oberfläche an Kurve, Kurve an Oberfläche und Kurve an Kurve gestattend.

4. Verfahren gemäß Anspruch 1, wobei zumindest einige der geometrischen Einheiten als Splines beschrieben werden.

5. Verfahren gemäß Anspruch 1, wobei zumindest einige der geometrischen Einheiten als ungleichmäßige rationale B-Splines (NURBS) beschrieben werden.

6. Verfahren gemäß Anspruch 1, wobei zumindest einige der geometrischen Einheiten als B-Splines beschrieben werden.

7. Verfahren gemäß Anspruch 1, wobei zumindest einige der geometrischen Einheiten durch Polygone beschrieben werden.

8. Verfahren gemäß Anspruch 1, wobei zumindest einige der geometrischen Einheiten durch algebraische Gleichungen beschrieben werden.

9. Verfahren gemäß Anspruch 1, wobei ein Unter-Anteil der grafischen Struktur des topologischen Knotens, einschließend geometrische Einheiten, als ein Prototyp für eine Anzahl von Ereignissen verwendet wird, sodass jedes solche Ereignis durch die Verwendung eines Bezugs auf den Prototyp beschrieben wird.

10. Verfahren gemäß Anspruch 9, wobei das Ereignis, das Bezug auf einen Prototyp nimmt, sich über eine oder mehrere Eigenschaften des Prototyps hinweg setzen kann.

11. Verfahren gemäß Anspruch 9, wobei das Ereignis, das Bezug auf einen Prototyp nimmt, ebenfalls eine Transformationsmatrix einschließt, die eine Transformation von dem Prototyp zu dem bezugnehmenden Beispiel definiert.

12. Verfahren gemäß Anspruch 1, wobei die geometrische Form eines gegebenen topologischen Knotens in einer der nachstehenden Arten verändert werden kann:
- durch Verändern der geometrischen Einheit, die mit dem topologischen Knoten verbunden ist,
- durch Verändern der Anker zwischen dem topologischen Knoten und seinen darunter liegenden topologischen Knoten,
- durch Verändern der Ankerpunkte in einem der Anker zwischen dem topologischen Knoten und seinen darunter liegenden topologischen Knoten,
- durch Verändern der darunter liegenden topologischen Knoten durch eine der vorstehenden Arten.

13. Verfahren gemäß Anspruch 1, wobei eine Information, die geometrische Einheiten, topologische Knoten und auch Anker beschreibt, zeitabhängig sein kann, und wobei die Abhängigkeit der oberen Schichten von unteren Schichten zu einer Zeitabhängigkeit in einer oberen Schicht führen wird, die an einer zeitabhängigen unteren Schicht verankert ist.

14. Verfahren gemäß Anspruch 13, wobei eine oder mehrere Ankerpunkte einer Verankerung einer oberen Schicht an einer unteren Schicht zugeordnet sind, und wobei eine Veränderung der Position der Ankerpunkte relativ zueinander oder relativ zu der Geometrie der darunter liegenden topologischen Knoten die geometrische Form der oberen Schicht gemäß den Regeln bei der Definition des Ankers beeinflussen wird.

15. Verfahren gemäß Anspruch 13, wobei ein Zeitintervall für einen topologischen Knoten, Anker oder geometrische Einheit definiert werden kann, wobei das Zeitintervall definiert, wann der topologischen Knoten, der Anker oder die geometrische Einheit aktiv ist.

16. Verfahren gemäß Anspruch 13, wobei ein Zustand für einen topologischen Knoten, Anker oder eine geometrische Einheit definiert werden kann, wobei der Zustand definiert, ob der topologischen Knoten, der Anker oder die geometrische Einheit aktiv sein soll.

17. Verfahren gemäß Anspruch 16, wobei der Zustand die Anwesenheit, Abwesenheit oder die Nähe von einem anderen Teil der geometrischen Darstellung oder die Anwesenheit einer definierten Eingabe von einer Benutzerschnittstelle oder einem anderen definierten Geschehen von einer, zu der geometrischen Darstellung externen Quelle sein kann.

18. Verfahren gemäß Anspruch 13, wobei eine mit einem topologischen Knoten verbundene geometrische Einheit eine Kurve, oder eine Oberfläche oder ein Punkt sein kann, und wobei ein topologischer Knoten an anderen topologischen Knoten verankert sein kann, unabhängig davon, mit welcher Art von geometrischen Einheiten er verbunden ist, dadurch die Verankerung von Oberfläche an Oberfläche, Oberfläche an Kurve, Kurve an Oberfläche und Kurve an Kurve gestattend.

19. Verfahren gemäß Anspruch 13, wobei zumindest einige der geometrischen Einheiten als Splines beschrieben werden.

20. Verfahren gemäß Anspruch 13, wobei zumindest einige der geometrischen Einheiten als ungleichmäßige rationale B-Splines (NURBS) beschrieben werden.

21. Verfahren gemäß Anspruch 13, wobei zumindest einige der geometrischen Einheiten als B-Splines beschrieben werden.

22. Verfahren gemäß Anspruch 13, wobei zumindest einige der geometrischen Einheiten durch Polygone beschrieben werden.

23. Verfahren gemäß Anspruch 13, wobei zumindest einige der geometrischen Einheiten durch algebraische Gleichungen beschrieben werden.

24. Verfahren gemäß Anspruch 13, wobei ein Unter-Anteil der grafischen Struktur des topologischen Knotens, einschließend geometrische Einheiten, als ein Prototyp für eine Anzahl von Ereignissen verwendet wird, sodass jedes solche Ereignis durch die Verwendung eines Bezugs auf den Prototyp beschrieben wird.

25. Verfahren gemäß Anspruch 24, wobei ein Ereignis, das Bezug auf einen Prototyp nimmt, sich über eine oder mehrere Eigenschaften des Prototyps hinweg setzen kann.

26. Verfahren gemäß Anspruch 24, wobei das Ereignis, das Bezug auf einen Prototyp nimmt, ebenfalls eine Transformationsmatrix einschließen kann, die eine Transformation von dem Prototyp zu dem bezugnehmenden Beispiel definiert.

## Revendications

1. Procédé de représentation de formes et de structures géométriques dans des graphiques informatiques, comprenant les étapes suivantes :
description d'objets géométriques en tant qu'un ensemble d'entités géométriques telles que des points, courbes et surfaces,
association de chaque entité géométrique à au moins un noeud topologique définissant ainsi une forme géométrique associée au noeud topologique,
définition d'ancres qui se réfèrent chacune à un noeud topologique sus-jacent et à un noeud topologique sous-jacent de telle sorte qu'une structure graphique orientée de surcouches et de sous-couches soit créée, dans laquelle chaque noeud topologique peut être ancré à un nombre quelconque de sous-couches et avoir un nombre quelconque de surcouches ancrées à celui-ci, et de telle sorte que la géométrie d'une surcouche dépende de ses sous-couches,
description des propriétés géométriques des ancres en tant qu'entités géométriques supplémentaires,
association de chacune de ces entités géométriques supplémentaires à au moins une ancre.

2. Procédé selon la revendication 1, dans lequel un ou plusieurs points d'ancrage sont associés à chaque ancrage d'une surcouche à une sous-couche.

3. Procédé selon la revendication 1, dans lequel une entité géométrique associée à chaque noeud topologique peut être une courbe, une surface ou bien un point, et dans lequel un noeud topologique peut être ancré à d'autres noeuds topologiques, indépendamment du type d'entités géométriques auxquelles il est associé, permettant ainsi l'ancrage surface à surface, surface à courbe, courbe à surface et courbe à courbe.

4. Procédé selon la revendication 1, dans lequel au moins certaines des entités géométriques sont décrites comme des splines.

5. Procédé selon la revendication 1, dans lequel au moins certaines des entités géométriques sont décrites comme des B-splines rationnelles non uniformes (NURBS).

6. Procédé selon la revendication 1, dans lequel au moins certaines des entités géométriques sont décrites comme des B-splines.

7. Procédé selon la revendication 1, dans lequel au moins certaines des entités géométriques sont décrites par des polygones.

8. Procédé selon la revendication 1, dans lequel au moins certaines des entités géométriques sont décrites par des équations algébriques.

9. Procédé selon la revendication 1, dans lequel chaque sous-partie de la structure graphique de noeud topologique, comprenant les entités géométriques, est utilisée comme un prototype pour chaque nombre d'occurrences, de telle sorte que chaque occurrence soit décrite en utilisant une référence au prototype.

10. Procédé selon la revendication 9, dans lequel chaque occurrence qui se réfère à un prototype peut remplacer une ou plusieurs des propriétés du prototype.

11. Procédé selon la revendication 9, dans lequel l'occurrence qui se réfère à un prototype comprend également une matrice de transformation, définissant une transformation du prototype en instance de référence.

12. Procédé selon la revendication 1, dans lequel la forme géométrique d'un noeud topologique donné peut être modifiée de l'une quelconque des manières suivantes :
- en modifiant l'entité géométrique associée au noeud topologique,
- en modifiant les ancres entre le noeud topologique et ses noeuds topologiques sous-jacents,
- en modifiant les points d'ancrage dans chacune des ancres entre le noeud topologique et ses noeuds topologiques sous-jacents,
- en modifiant les noeuds topologiques sous-jacents de l'une quelconque des manières précédentes.

13. Procédé selon la revendication 1, dans lequel toute information décrivant des entités géométriques, des noeuds topologiques ainsi que des ancres peut être fonction du temps, et dans lequel la dépendance des surcouches par rapport aux sous-couches conduira à une dépendance temporelle dans chaque surcouche ancrée à une sous-couche à dépendance temporelle.

14. Procédé selon la revendication 13, dans lequel un ou plusieurs points d'ancrage sont associés à chaque ancrage d'une surcouche à une sous-couche et dans lequel un changement dans la position des points d'ancrage les uns par rapport aux autres ou par rapport à la géométrique des noeuds topologiques sous-jacents influencera la forme géométrique de la surcouche selon les règles dans la définition de l'ancre.

15. Procédé selon la revendication 13, dans lequel un intervalle de temps peut être défini pour chaque noeud topologique, ancre ou entité géométrique, ledit intervalle de temps définissant la période d'activité du noeud topologique, de l'ancre ou de l'entité géométrique.

16. Procédé selon la revendication 13, dans lequel une condition peut être définie pour chaque noeud topologique, ancre ou entité géométrique, ladite condition définissant si le noeud topologique, l'ancré ou l'entité géométrique doit être actif.

17. Procédé selon la revendication 16, dans lequel la condition peut être la présence, l'absence ou la proximité de toute autre partie de la représentation géométrique ou la présence d'une entrée définie à partir d'une interface utilisateur ou de tout autre événement défini à partir d'une source extérieure à la représentation géométrique.

18. Procédé selon la revendication 13, dans lequel une entité géométrique associée à chaque noeud topologique peut être une courbe, une surface ou bien un point, et dans lequel un noeud topoloqique peut être ancré à d'autres noeuds topologiques, indépendamment du type d'entités géométriques auxquelles il est associé, permettant ainsi l'ancrage surface à surface, surface à courbe, courbe à surface et courbe à courbe.

19. Procédé selon la revendication 13, dans lequel au moins certaines entités géométriques sont décrites comme des splines.

20. Procédé selon la revendication 13, dans lequel au moins certaines des entités géométriques sont décrites comme des B-splines rationnelles non uniformes (NURBS).

21. Procédé selon la revendication 13, dans lequel au moins certaines des entités géométriques sont décrites comme des B-splines.

22. Procédé selon la revendication 13, dans lequel. au moins certaines des entités géométriques sont décrites par des polygones.

23. Procédé selon la revendication 13, dans lequel au moins certaines des entités géométriques sont décrites par des équations algébriques.

24. Procédé selon la revendication 13, dans lequel chaque sous-partie de la structure graphique de noeud topologique, comprenant les entités géométriques, est utilisée comme un prototype pour chaque nombre d'occurrences, de telle sorte que chaque occurrence soit décrite en utilisant une référence au prototype.

25. Procédé selon la revendication 24, dans lequel chaque occurrence qui se réfère à un prototype peut remplacer une ou plusieurs des propriétés du prototype.

26. Procédé selon la revendication 24, dans lequel l'occurrence qui se réfère à un prototype comprend également une matrice de transformation, définissant une transformation du prototype en instance de référence.
